# EUROPÄISCHE PATENTANMELDUNG

(11) **EP 1 085 310 A1**
(43) Veröffentlichungstag der Anmeldung: **21.03.2001**
(21) Anmeldenummer: 99118287.4
(22) Anmeldetag: 15.09.1999
(51) Int. Cl.: G01L 19/02

(54) **Transmitter**

(71) Anmelder: Endress + Hauser GmbH + Co., 79689 Maulburg (DE)
(72) Erfinder: Bernauer, Andreas, 79650 Schopfheim (DE); Brock, Hansjörg, 79639 Grenzach-Wyhlen (DE)
(74) Vertreter: Redding, Anke Dipl.-Phys.

(57) **Zusammenfassung**

Es ist ein Transmitter vorgesehen, dessen Bedienung durch Umwelteinflüsse unbeeinträchtig ist, mit einem Meßaufnehmer (3), einer in einem Gehäuse (1) auf einer Leiterplatte (9) angeordneten Elektronik (11), einem von außerhalb des Gehäuses (1) bedienbaren Bedienelement (15) und einem Übertrager (19), der eine auf das Bedienelement (15) ausgeübte Kraft auf einen mit der Elektronik (11) verbundenen Schalter überträgt, wobei der Schalter eine Taste einer auf der Leiterplatte (9) angeordneten Folientastatur (23) ist.

## Beschreibung

Die Erfindung betrifft einen Transmitter.

Transmitter sind Meßgeräte, die eine oder mehrere physikalische Größen erfassen, in eine elektrische Größe umwandeln und den physikalischen Größen entsprechende Meßwerte einer weiteren Anzeige und/oder Verarbeitung zugänglich machen.

Beispiele hierfür sind Druckmeßgeräte, Füllstandsmeßgeräte und Durchflußmeßgeräte. Transmitter werden in einer Vielzahl von Industriezweigen, z.B. in Anlagen in der Chemie, in der Lebensmittelindustrie oder im Bereich der Wasserversorgung eingesetzt. Ihr Einsatzbereich reicht von der einfachen Messung und Anzeige bis hin zur Meßwertgenerierung für die Prozeßautomatisierung.

Ein Transmitter weist mindestens einen Meßaufnehmer zur Erfassung mindestens einer physikalischen Größe auf. Typischerweise liefert der Meßaufnehmer im Betrieb ein Rohsignal. Das Rohsignal ist einer Elektronik zugeführt, die aus dem Rohsignal ein einem aktuellen Meßwert entsprechendes Meßsignal erzeugt und einer weiteren Anzeige und/oder Verarbeitung zugänglich macht.

Für die Erzeugung des aktuellen Meßwerts werden in der Regel Informationen, Daten und/oder Angaben benötigt, die von der speziellen Verwendung des Transmitters und/oder dessen Einsatzort abhängen. Diese Informationen, Daten und/oder Angaben werden vorzugsweise über von außerhalb des Transmitters zugängliche Bedienelemente vor Ort abgefragt, eingegeben und/oder geändert.

In der Meß- und Regeltechnik werden z.B. Transmitter verwendet, die einen Meßaufnehmer und eine in einem Gehäuse auf einer Leiterplatte angeordneten Elektronik aufweisen, die eine Fläche aufweist, auf der zwei Leiterbahnen offen liegen. Durch eine auf ein von außerhalb des Gehäuses zugängliches Bedienelement ausgeübte Kraft wird ein Stößel in Richtung Leiterplatte bewegt, bis dieser auf beiden Leiterbahnen aufliegt und eine elektrisch leitende Verbindung zwischen den beiden Leiterbahnen bewirkt. Die beiden Leiterbahnen bilden einen Schalter, der durch den Stößel geschlossen wird.

Diese Anordnung bietet den Vorteil, daß die Bedienelemente bequem von außerhalb des Gehäuses zugänglich sind und gleichzeitig die Bedieninformation über den Schalter direkt dort vorliegt, wo sie benötigt wird, nämlich in der Elektronik. Die Elektronik kann somit nah beim Meßaufnehmer sein, damit möglichst kurze Leitungswege vorliegen und trotzdem direkt über die Bedienelemente von außen angesprochen werden. Kurze Leitungswege sind insofern von Vorteil, als bei kurzen Leitungen die Gefahr einer Einkopplung von Störungen und einer dadurch bedingten Verfälschung des Meßergebnisses gering ist.

Nachteilig ist jedoch, daß der Stößel und die beiden Leiterbahnen frei liegen. Es besteht die Gefahr von Oxidation und Korrosion dieser Bauteile. Zusätzlich kann in das Gehäuse eindringende Feuchtigkeit zu ungewollten Kurzschlüssen führen, die von der Elektronik nicht von einem absichtlich ausgeführten Schaltvorgang unterschieden werden kann.

Es ist eine Aufgabe der Erfindung, einen Transmitter anzugeben, dessen Bedienung durch Umwelteinflüsse unbeeinträchtigt ist.

Hierzu besteht die Erfindung in einem Transmitter mit
- einem Meßaufnehmer,
- einer in einem Gehäuse auf einer Leiterplatte angeordneten Elektronik,
- einem von außerhalb des Gehäuses bedienbaren Bedienelement und
- einem Übertrager,
   -- der eine auf das Bedienelement ausgeübte Kraft auf einen mit der Elektronik verbundenen Schalter überträgt,
- wobei der Schalter eine Taste einer auf der Leiterplatte angeordneten Folientastatur ist.

Gemäß einer Ausgestaltung ist die Folientastatur integraler Bestandteil der Leiterplatte.

Gemäß einer Weiterbildung ist die Folientastatur auf einer Fläche der Leiterplatte angeordnet, auf der mindestens zwei Leiterbahnen offen liegen. Sie weist eine Abstandsfolie auf, die die Fläche überdeckt und die an den Stellen, an denen eine elektrische Verbindung zwischen zwei Leiterbahnen herstellbar ist, Durchbrüche aufweist. Weiter weist sie eine Abdeckfolie auf, die auf der Abstandsfolie angeordnet ist und die an die Durchbrüche überdeckenden der Leiterplatte zugewandten Innenflächen Kontaktelemente aufweist.

Gemäß einer Ausgestaltung bilden Abdeckfolie, Abstandsfolie und Leiterplatte im Bereich jeden Durchbruchs eine Taste und ein auf die Taste ausgeübter Druck bewirkt eine Durchbiegung der Abdeckfolie derart, daß das jeweilige Kontaktelement eine elektrisch leitende Verbindung zwischen den beiden Leiterbahnen bewirkt.

Gemäß einer weiteren Ausgestaltung ist eine Oberfläche der Leiterplatte einschließlich der Elektronik und der Folientastatur zum Schutz vor Feuchtigkeit oberflächenbehandelt, insb. lackiert.

Die Erfindung und deren Vorteile werden nun anhand der Figuren der Zeichnung, in denen ein Ausführungsbeispiel dargestellt ist, näher erläutert. Gleiche Elemente sind in den Figuren mit den gleichen Bezugszeichen versehen.
- Fig. 1: zeigt einen Schnitt durch einen Transmitter;
- Fig. 2: zeigt eine Vergrößerung eines Ausschnitts von Fig. 1, in dem die Bedienelemente, die Übertrager, die Folientastatur und ein Abschnitt der Leiterplatte dargestellt sind;
- Fig. 3: zeigt einen Schnitt durch einen Abschnitt der Leiterplatte auf dem die Folientastatur angeordnet ist, und die der Leiterplatte gegenüberliegenden freien Enden der Stößel;
- Fig. 4: zeigt eine Draufsicht auf die Fläche der Leiterplatte mit den freiliegenden Leiterbahnen;
- Fig. 5: zeigt die Abstandsfolie; und
- Fig. 6: zeigt die Ansicht der Innenfläche der Abdeckfolie.

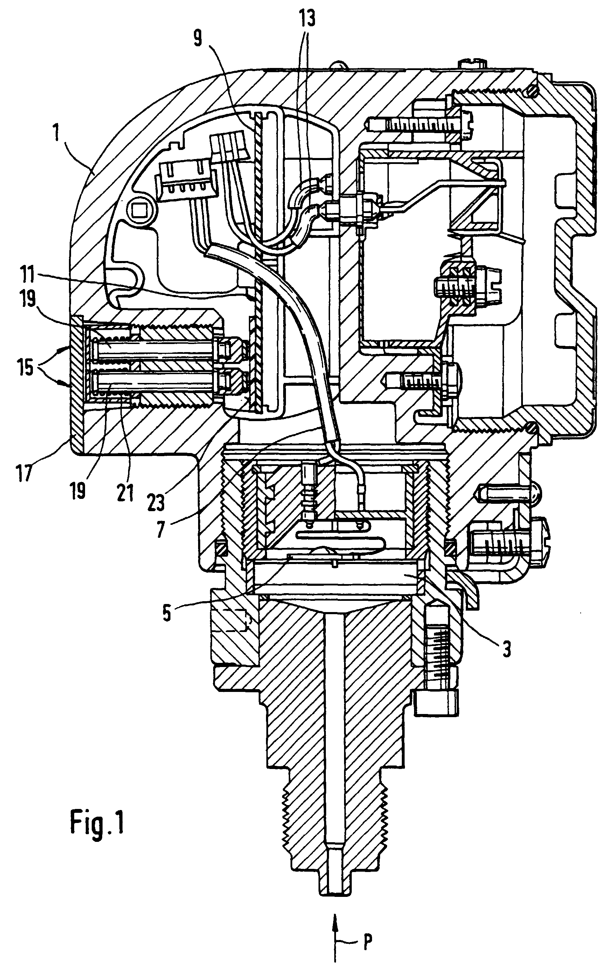

Fig. 1 zeigt einen Schnitt durch einen Transmitter. In diesem Ausführungsbeispiel ist der Transmitter ein Druckmeßgerät. Die Erfindung ist jedoch nicht auf Drucktransmitter beschränkt, sondern auch bei beliebigen anderen Transmittern einsetzbar.

Der Transmitter weist ein Gehäuse 1 und einen Meßaufnehmer 3 auf. In dem gezeigten Ausführungsbeispiel ist der Meßaufnehmer 3 eine kapazitive keramische Druckmeßzelle mit einem Grundkörper und einer Meßmembran. Die Meßmembran und der Grundkörper sind an deren Rand unter Bildung einer Meßkammer mittels einer Fügestelle druckdicht und gasdicht miteinander verbunden. Ein auf die Meßmembran einwirkender Druck P bewirkt eine Auslenkung der Meßmembran aus deren Ruhelage.

Auf einer Innenseite der Meßmembran ist eine Elektrode und auf einer gegenüberliegenden Innenseite des Grundkörpers ist mindestens eine Gegenelektrode angeordnet. Elektrode und Gegenelektrode bilden einen Kondensator. Auf dem Grundkörper ist eine Wandlerschaltung 5 vorgesehen, die Kapazitätsänderungen des Kondensators in eine elektrische Größe, z.B. in eine sich entsprechend ändernde elektrische Spannung, umwandelt.

Andere Transmitter ist weisen natürlich andere Meßaufnehmer auf. Allen gemeinsam ist jedoch, daß die Meßaufnehmer eine physikalische Meßgröße erfassen und in eine elektrische Größe umwandeln. In der Regel weisen Transmitter eine Wandlerschaltung auf, über die die elektrische Größe als Rohsignal einer nachfolgenden Elektronik zugeführt ist.

Bei dem Transmitter von Fig. 1 ist die Wandlerschaltung 5 über Anschlußleitungen 7 mit einer in dem Gehäuse 1 auf einer Leiterplatte 9 angeordneten Elektronik 11 verbunden. In der Elektronik 11 wird die eingehende elektrische Größe erfaßt und daraus ein Meßwert bestimmt und ein Meßsignal generiert, das für eine Anzeige und/oder Verarbeitung über Anschlußleitungen 13 zur Verfügung steht. Zur Bestimmung des Meßwerts bzw. zur Generierung des Meßsignals wird das von der Wandlerschaltung 5 generierte Rohsignal aufbereitet. Hierzu werden neben meßaufnehmer-spezifischen Informationen, wie z.B. Kennlinien, Korrekturgrößen zur Kompensation von Meßfehlern, Angaben zum Meßbereich etc. auch Informationen, Daten und/oder Angaben benötigt, die von der speziellen Verwendung des Transmitters und/oder dessen Einsatzort abhängen. Diese Informationen, Daten und/oder Angaben können nicht werkseitig eingespeist werden, sondern müssen vor Ort abgefragt, eingegeben und/oder geändert werden. Beispiele hierfür sind der Nullpunkt eines Drucksensors, der am Meßort einzustellen ist, eine Einheit, in der das Meßergebnis ausgedrückt werden soll und/oder ein vom Benutzer wählbarer Meßbereich.

Der Transmitter weist hierzu von außerhalb des Transmitters zugängliche Bedienelemente 15 auf. Die Bedienelemente 15 sind in dem gezeigten Ausführungsbeispiel auf einer Gehäuseabdeckung 17 markierte Tastenfelder. Die Gehäuseabdeckung 17 ist im Bereich der Tastenfelder biegsam. Ein auf ein Tastenfeld ausgeübter Druck bewirkt eine Durchbiegung des Tastenfelds. Innerhalb des Gehäuses 1 ist hinter jedem Tastenfeld ein Übertrager 19 angeordnet, der eine auf das Bedienelement 15 ausgeübte Kraft auf einen mit der Elektronik 11 verbundenen Schalter überträgt. In dem gezeigten Ausführungsbeispiel sind die Übertrager 19 mittels Federn 21 vorgespannte Stößel. Jede Feder wird durch Druck auf das ihr räumlich zugeordnete Tastenfeld komprimiert und es wird der Stößel in Richtung der Leiterplatte 9 bewegt, wo er auf den korrespondierenden Schalter trifft und einen Schaltvorgang auslöst.

Statt der beschriebenen Tastenfelder könnten natürlich auch Hebel, Druckknöpfe oder ähnliche Bauteile als Bedienelemente eingesetzt werden. Die Übertrager sind dann entsprechend auszubilden, so daß sie eine auf ein Bedienelement ausgeübte Kraft auf den Schalter übertragen.

Erfindungsgemäß sind die Schalter Tasten einer auf der Leiterplatte 9 angeordneten Folientastatur 23.

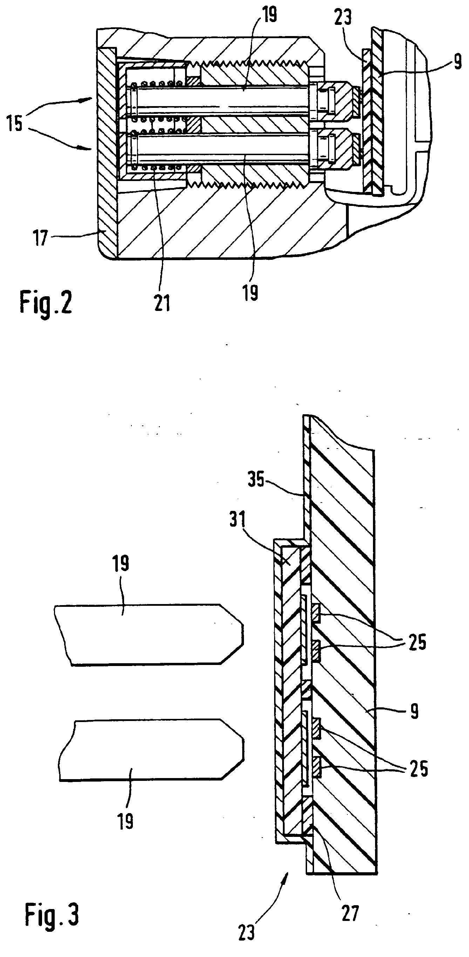

Fig. 2 zeigt eine Vergrößerung eines Ausschnitts von Fig. 1, in dem die Bedienelemente 15, die Übertrager 19, die Folientastatur 23 und ein Abschnitt der Leiterplatte 9 dargestellt sind. Fig. 3 zeigt einen Schnitt durch einen Abschnitt der Leiterplatte 9 auf dem die Folientastatur 23 angeordnet ist und die dieser gegenüberliegenden freien Enden der Stößel.

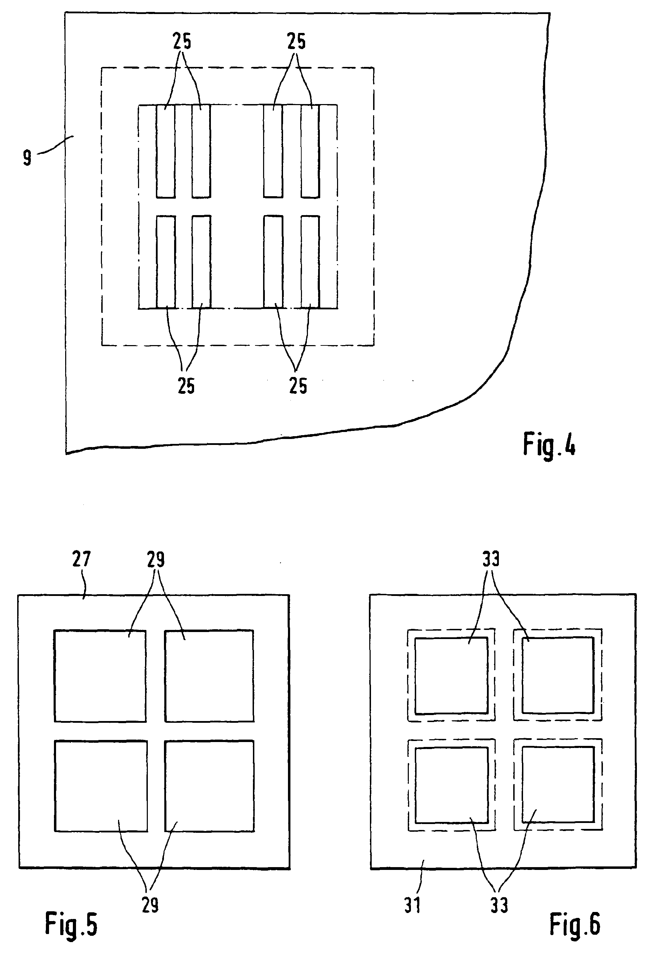

Die Folientastatur 23 ist integraler Bestandteil der Leiterplatte 9. Sie ist auf einer Fläche der Leiterplatte 9 angeordnet, auf der mindestens zwei Leiterbahnen 25 offen liegen. Jeweils zwei Leiterbahnen 25 sind mit einem in den Figuren nicht dargestellten Schaltkreis verbunden, bei dem eine elektrische Verbindung zwischen den beiden Leiterbahnen 25 einen Schaltvorgang bewirkt. Fig. 4 zeigt eine Draufsicht auf die Fläche der Leiterplatte 9 mit den freiliegenden Leiterbahnen 25.

Auf die Fläche ist eine in Fig. 5 dargestellte Abstandsfolie 27 aus einem Isolator aufgebracht. Die Abstandsfolie 27 überdeckt die Fläche auf der Leiterplatte 9 und weist an den Stellen, an denen eine elektrische Verbindung zwischen jeweils zwei Leiterbahnen 25 herstellbar ist, Durchbrüche 29 auf.

Auf der Abstandsfolie 27 ist eine Abdeckfolie 31 angeordnet. Fig. 6 zeigt eine Ansicht der Abstandsfolie 27 zugewandten Innenfläche der Abdeckfolie 31. Die Abdeckfolie 31 weist an die Durchbrüche 29 der Abstandsfolie 27 überdeckenden, der Leiterplatte 9 zugewandten Innenflächen Kontaktelemente 33 auf. Die Kontaktelemente 33 bestehen z.B. aus einer Leitsilberpaste, die auf die entsprechenden Flächen der Abdeckfolie 31 aufgebracht ist.

Die Abdeckfolie 31, die Abstandsfolie 27 und die Leiterplatte 9 bilden im Bereich eines jeden Durchbruchs 29 eine Taste. Ein auf die Taste ausgeübter Druck bewirkt eine Durchbiegung der Abdeckfolie 31 derart, daß das jeweilige Kontaktelement 33 eine elektrisch leitende Verbindung zwischen den beiden Leiterbahnen 25 bewirkt. Jedesmal, wenn ein Benutzer ein Bedienelement 15 betätigt, wird durch den Übertrager 19 die zugeordnete Taste auf der Folientastatur 23 gedrückt und ein Schaltvorgang ausgelöst.

Die Abeckfolie 31 und die Abstandsfolie 27 bestehen beide aus einem Isolator, z.B. aus Polyester. Sie sind vorzugsweise dauerelastisch und dicht miteinander verbunden. Genauso ist die Abstandsfolie 27 vorzugsweise dicht mit der Leiterplatte 9 verbunden. Für den Fall, daß die Leiterplatte 9 elastisch ist, empfiehlt sich auch hier eine dauerelastische Verbindung. Eine dichte und dauerelastische Verbindung ist z.B. mit einem Kleber, z.B. einem Acrylatkleber, realisierbar.

Die auf der Leiterplatte 9 offen liegenden Leiterbahnen 9 und die Kontaktelemente 33 sind von der Abdeckfolie 31 und der Abstandsfolie 27 umschlossen und die dichten Verbindungen zwischen Leiterplatte 9, Abstandsfolie 27 und Abdeckfolie 33 bewirken eine vollständige Abdichtung der eingeschlossenen Innenräume. Die Leiterbahnen 25 und die Kontaktelemente 33 sind dauerhaft vor Feuchtigkeit und anderen widrigen Umwelteinflüssen geschützt.

Bei dem erfindungsgemäßen Transmitter hat der Übertrager 19 lediglich eine mechanische Funktion. Er ist elektrisch nicht in den Schaltvorgang einbezogen. Eine Veränderung der Oberfläche des Übertragers 19, z.B. Oxidation, beeinträchtigt die Bedienbarkeit des Transmitters in keiner Weise.

Vorzugsweise ist eine Oberfläche der Leiterplatte 9 zum Schutz vor Feuchtigkeit oberflächenbehandelt, insb. lackiert. Im Gegensatz zu herkömmlichen Transmittern, bei denen frei liegenden Leiterbahnen z.B. durch eine entprechende Maske von dieser Behandlung ausgenommen werden mußten, kann bei einem erfindungsgemäßen Transmitter die gesamte Oberfläche der Leiterplatte 9 einschließlich der Elektronik 11 und der Folientastatur 23 oberflächenbehandelt werden. Die Oberflächenbehandlung ist in Fig. 3 als eine Oberflächenbeschichtung 35 dargestellt. Da keinerlei Sonderflächen vorhanden sind, die von der Oberflächenbehandlung ausgenommen werden müssen, kann dies in einem einfachen Arbeitsvorgang erfolgen.

| | |
|---|---|
| 1 | Gehäuse |
| 3 | Meßaufnehmer |
| 5 | Wandlerschaltung |
| 7 | Anschlußleitung |
| 9 | Leiterplatte |
| 11 | Elektronik |
| 13 | Anschlußleitungen |
| 15 | Bedienelemente |
| 17 | Gehäuseabdeckung |
| 19 | Übertrager |
| 21 | Feder |
| 23 | Folientastatur |
| 25 | Leiterbahnen |
| 27 | Abstandsfolie |
| 29 | Durchbruch |
| 31 | Abdeckfolie |
| 33 | Kontaktelemente |
| 35 | Oberflächenbeschichtung |

## Patentansprüche

1. Transmitter mit
- einem Meßaufnehmer (3),
- einer in einem Gehäuse (1) auf einer Leiterplatte (9) angeordneten Elektronik (11),
- einem von außerhalb des Gehäuses (1) bedienbaren Bedienelement (15) und
- einem Übertrager (19),
-- der eine auf das Bedienelement (15) ausgeübte Kraft auf einen mit der Elektronik (11) verbundenen Schalter überträgt,
- wobei der Schalter eine Taste einer auf der Leiterplatte (9) angeordneten Folientastatur (23) ist.

2. Transmitter nach Anspruch 1, bei dem die Folientastatur (23) integraler Bestandteil der Leiterplatte (9) ist.

3. Transmitter nach Anspruch 1 oder 2, bei dem die Folientastatur (23)
- auf einer Fläche der Leiterplatte (9) angeordnet ist,
-- auf der mindestens zwei Leiterbahnen (25) offen liegen,
- eine Abstandsfolie (27) aufweist,
-- die die Fläche überdeckt und
-- die an den Stellen, an denen eine elektrische Verbindung zwischen zwei Leiterbahnen (25) herstellbar ist, Durchbrüche (29) aufweist, und
- die eine Abdeckfolie (31) aufweist,
-- die auf der Abstandsfolie (27) angeordnet ist und
-- die an die Durchbrüche (29) überdeckenden der Leiterplatte (9) zugewandten Innenflächen Kontaktelemente (33) aufweist.

4. Transmitter nach Anspruch 3, bei dem Abdeckfolie (31), Abstandsfolie (27) und Leiterplatte (9) im Bereich jeden Durchbruchs (29) eine Taste bilden und ein auf die Taste ausgeübter Druck eine Durchbiegung der Abdeckfolie (31) derart bewirkt, daß das jeweilige Kontaktelement (33) eine elektrisch leitende Verbindung zwischen den beiden Leiterbahnen (25) bewirkt.

5. Transmitter nach Anspruch 1, bei dem eine Oberfläche der Leiterplatte (9) einschließlich der Elektronik (11) und der Folientastatur (23) zum Schutz vor Feuchtigkeit oberflächenbehandelt, insb. lackiert, ist.
